# EUROPÄISCHE PATENTSCHRIFT

(11) **EP 3 456 949 B1**
(45) Veröffentlichungstag und Bekanntmachung des Hinweises auf die Patenterteilung: **09.12.2020**
(21) Anmeldenummer: 18193445.6
(22) Anmeldetag: 10.09.2018
(51) Int. Cl.: F02D 41/04, F02N 3/02, F02N 15/02, F02D 31/00, F02D 41/00, F02D 41/06, F02P 5/15

(54) **HANDGEFÜHRTES ARBEITSGERÄT**
MANUALLY OPERATED WORK DEVICE
APPAREIL DE TRAVAIL PORTATIF

(30) Priorität: 15.09.2017 DE 102017008755; 09.04.2018 DE 102018002964
(43) Veröffentlichungstag der Anmeldung: 20.03.2019
(73) Patentinhaber: Andreas Stihl AG & Co. KG, 71336 Waiblingen (DE)
(72) Erfinder: Klatt, Clemens, 73663 Berglen (DE)
(74) Vertreter: Reinhardt, Annette

(56) Entgegenhaltungen:
- EP-A1- 2 087 973
- EP-A1- 2 481 905
- EP-A1- 2 607 673
- EP-A2- 2 787 215
- EP-A2- 3 144 521
- DE-A1-102007 031 396
- DE-A1-102009 036 372
- DE-A1-102013 009 669

## Beschreibung

Die Erfindung betrifft ein handgeführtes Arbeitsgerät der im Oberbegriff des Anspruchs 1 angegebenen Gattung.

Für handgeführte Arbeitsgeräte mit einem Verbrennungsmotor zum Antrieb eines Werkzeugs des Arbeitsgeräts ist es bekannt, zum Starten des Verbrennungsmotors über einen manuell betätigten Seilzugstarter eine Starteinrichtung zu betätigen. Eine solche Starteinrichtung kann beispielsweise ein Chokeelement umfassen. Es ist bekannt, dass derartige Starteinrichtungen vom Bediener von Hand in die Startstellung zu verstellen sind. Sobald der Motor läuft und der Bediener Gas gibt, ist es bekannt, dass sich mechanisch verriegelte Startsysteme automatisch entriegeln und die Startstellung gelöst wird. Vor dem nächsten Start des Verbrennungsmotors muss der Bediener erneut die Starteinrichtung betätigen.

Aus der EP 2 481 905 A1 geht ein gattungsgemäßes handgeführtes Arbeitsgerät hervor. Die Einstellung des Startmodus erfolgt über einen Betriebsartensteller, der eine Chokeklappe und/oder eine Drosselklappe in eine Startstellung verstellt.

Die DE 10 2009 036 372 A1 offenbart ebenfalls ein handgeführtes Arbeitsgerät, bei dem der Startmodus über einen Betriebsartensteller eingestellt wird. Für den Startmodus werden Chokeklappe und/oder Drosselklappe zur Verringerung des freien Strömungsquerschnitts des Ansaugkanals angestellt.

Die DE 10 2013 009 669 A1 offenbart einen Verbrennungsmotor, dem Kraftstoff über einen Walzenvergaser zugeführt wird. Zur Einstellung der Startstellung wird der freie Strömungsquerschnitt einer Kraftstofföffnung verändert und der Strömungsquerschnitt des Ansaugkanals verringert.

Die EP 2 087 973 A1 offenbart ein handgeführtes Arbeitsgerät, an dessen Bremseinrichtung ein Sensor angeordnet ist, der den Zustand der Bremseinrichtung erfasst. In Abhängigkeit des Zustands des Signals der Bremseinrichtung werden Aggregate des Arbeitsgeräts gesteuert.

Die EP 3 144 521 A2 offenbart ein Verfahren zum Betrieb eines Arbeitsgeräts, bei dem die Drehzahl des Verbrennungsmotors überwacht und der Zündzeitpunkt nach früh verstellt wird, da die Drehzahl innerhalb einer vorgegebenen Zeitdauer innerhalb eines vorgegebenen Drehzahlbereichs liegt und danach die Drehzahl unter einen Drehzahlgrenzwert abfällt.

Die DE 10 2007 031 396 A1 offenbart unterschiedliche Zündzeitpunktkurven, nach denen ein Zweitaktmotor gesteuert werden kann. Es sind unterschiedliche Kennlinien für den Start und den Betriebszustand vorgesehen.

Aus der DE 20 2011 000 519 U1 geht ein handgeführtes Arbeitsgerät hervor, bei dem Choke und Halbgas automatisch nach dem Start des Motors aktiviert werden. Dies kann über eine Aktivierungsfeder erfolgen. Für die Startstellung ist ein Chokeelement vorgesehen.

Der Erfindung liegt die Aufgabe zugrunde, ein handgeführtes Arbeitsgerät zu schaffen, das einen einfachen Aufbau besitzt und bei dem Bedienfehler beim Starten des Verbrennungsmotors vermieden sind.

Diese Aufgabe wird durch ein handgeführtes Arbeitsgerät mit den Merkmalen des Anspruchs 1 gelöst.

Es ist vorgesehen, dass das Arbeitsgerät einen Startmodus besitzt, in dem der Verbrennungsmotor über einen Seilzugstarter gestartet werden kann. Das Arbeitsgerät besitzt außerdem einen Betriebsmodus, in dem der Bediener den Verbrennungsmotor durch Verstellen des Drosselelements zur Änderung der Drehzahl des Verbrennungsmotors ansteuern kann. Das Arbeitsgerät besitzt eine Steuereinrichtung, die zur Ansteuerung einer Zündkerze und eines Kraftstoffventils des Verbrennungsmotors vorgesehen ist. Über die Steuereinrichtung kann daher gesteuert werden, ob eine Zündung erfolgt, und der Zündzeitpunkt und die zu dem Verbrennungsmotor zuzuführende Kraftstoffmenge können gesteuert werden.

Die Erfindung sieht vor, dass der Betriebsmodus und der Startmodus des Arbeitsgerätes ein Betriebsmodus und ein Startmodus der Steuereinrichtung sind und dass der Betriebsmodus und der Startmodus sich durch die Steuerung von Zündzeitpunkt und zuzuführender Kraftstoffmenge über die Steuereinrichtung unterscheiden und dass die Steuereinrichtung sich beim Starten des Verbrennungsmotors aus dem abgeschalteten Zustand automatisch im Startmodus befindet. Der abgeschaltete Zustand des Verbrennungsmotors ist dabei der Zustand, in dem die Steuereinrichtung stromlos ist.

Die vorliegende Erfindung sieht demnach keine mechanische Starteinrichtung vor. Vielmehr werden Startmodus und Betriebsmodus elektronisch über die Steuereinrichtung eingestellt, und zwar durch dem Startmodus bzw. dem Betriebsmodus entsprechende Ansteuerung von Kraftstoffventil und Zündkerze. Mechanische Komponenten für den Startmodus, beispielsweise eine Chokeklappe zur Einstellung des Startmodus, können daher entfallen. Auch mechanische Komponenten zum Lösen des Startmodus bzw. zum Beenden des Startmodus werden nicht benötigt. Dadurch, dass das Arbeitsgerät nach dem Ausschalten des Verbrennungsmotors über den Stopptaster durch Einwirken auf die Steuereinrichtung automatisch in den Startmodus verstellt wird, ist das Arbeitsgerät nach dem Ausschalten für den nächsten Anwerfvorgang bereit, so dass der Bediener zum Starten des Verbrennungsmotors keine Starteinrichtung betätigen muss.

Bevorzugt befindet sich die Steuereinrichtung des Verbrennungsmotors automatisch im Startmodus, wenn die Steuereinrichtung bei dem folgenden Startvorgang aufwacht, insbesondere beim Ziehen am Anwerfseil. Die Steuerung wacht dabei insbesondere aus dem vollständig stromlosen Zustand auf. Die Verstellung des Verbrennungsmotors aus dem Betriebsmodus in den Startmodus erfolgt demnach, wenn die Steuereinrichtung stromlos ist, also nach dem Ausschalten der Steuereinrichtung, insbesondere nachdem ein Mikroprozessor der Steuereinrichtung durch Herunterfahren abgeschaltet wurde. Wird unmittelbar nach dem Ausschalten des Verbrennungsmotors über den StoppTaster, also solange die Steuereinrichtung noch nicht vollständig stromlos ist, erneut am Anwerfseil gezogen, so kann auch vorgesehen sein, dass das Arbeitsgerät im Betriebsmodus wiedergestartet wird.

Es ist vorteilhaft vorgesehen, dass im Startmodus, insbesondere bis zum Erkennen einer ersten Verbrennung, für Zündzeitpunkt und Kraftstoffmenge Standardwerte verwendet werden und erst nach dem Erkennen der ersten Verbrennung eine Regelung von Zündzeitpunkt und/oder Kraftstoffmenge erfolgt.

Das Verstellen in den Startmodus erfolgt elektronisch durch die Software der Steuereinrichtung. Beim Starten aus dem vollständig stromlosen Zustand befindet sich die Steuereinrichtung immer im Startmodus. Dadurch, dass die Kraftstoffzufuhr über ein Kraftstoffventil erfolgt, kann die zugeführte Kraftstoffmenge in weiten Grenzen gesteuert werden, so dass auch bei niedrigen Temperaturen ein Starten des Verbrennungsmotors ohne die Betätigung eines Chokeelements im Ansaugkanal möglich ist. Das Kraftstoffventil kann den Kraftstoff dabei direkt in den Ansaugkanal zuführen. Auch eine Zufuhr des Kraftstoffs direkt in ein Kurbelgehäuse des Verbrennungsmotors kann vorteilhaft sein. Es kann jedoch auch vorgesehen sein, dass das Kraftstoffventil in einem Vergaser des Verbrennungsmotors angeordnet ist und die Kraftstoffmenge steuert, die einer oder mehrerer in den Ansaugkanal mündenden Kraftstofföffnungen zugeführt wird. In diesem Fall ist die zugeführte Kraftstoffmenge sowohl von der Ansteuerung des Kraftstoffventils als auch vom Unterdruck im Ansaugkanal abhängig.

Der Betriebsmodus und der Startmodus unterscheiden sich vorteilhaft allein durch die Steuerung von Zündzeitpunkt und zuzuführender Kraftstoffmenge über die Steuereinrichtung. Insbesondere unterscheiden sich der Betriebsmodus bei unbetätigtem Drosselelement, insbesondere unbetätigtem Gashebel des Arbeitsgeräts, und der Startmodus nicht durch den freien Strömungsquerschnitt des Ansaugkanals.

Vorteilhaft ist ein einziges steuerbares Drosselelement im Ansaugkanal angeordnet. Auf dieses einzige steuerbare Drosselelement wirkt der Bediener, beispielsweise über einen Gashebel ein, um die Drehzahl des Verbrennungsmotors im Betrieb einzustellen. Ein weiteres Drosselelement, insbesondere ein Chokeelement, ist demnach im Ansaugkanal nicht vorgesehen. Dadurch ergibt sich ein einfacher Aufbau des Arbeitsgeräts.

Das Drosselelement ist von einem Bediener über einen Gashebel zwischen einer ersten Endlage und einer zweiten Endlage verstellbar. Die erste Endlage ist dabei dem Leerlauf zugeordnet und die zweite Endlage der Volllast. Im Startmodus befindet sich das Drosselelement in der ersten Endlage. Demnach befindet sich das Drosselelement im Startmodus in der gleichen Position wie im Leerlauf. Diese Stellung des Drosselelements ergibt sich zwangsweise, wenn der Bediener den Gashebel des Arbeitsgeräts nicht betätigt. Eine Betätigung des Gashebels ist beim Anwerfen jedoch nicht vorgesehen, da der Bediener beide Hände zum Halten des Arbeitsgeräts und Betätigen der Anwerfvorrichtung benötigt. Eine Startstellung des Drosselelements, die sich von der Leerlaufstellung unterscheidet, ist demnach nicht vorgesehen. Der freie Strömungsquerschnitt des Ansaugkanals ist erfindungsgemäß für den Startmodus und den Leerlaufbetrieb gleich.

Vorteilhaft besitzt das Drosselelement mindestens eine Öffnung, die in der ersten Endlage einen definierten Öffnungsquerschnitt bereitstellt. Der Öffnungsquerschnitt der mindestens einen Öffnung bestimmt, gegebenenfalls gemeinsam mit einem oder mehreren Bypasskanälen, den freien Querschnitt des Ansaugkanals im Startmodus. Dadurch, dass der Öffnungsquerschnitt im Startmodus durch mindestens eine Öffnung des Drosselelements und einen oder mehrere Bypasskanäle definiert ist, kann der freie Strömungsquerschnitt in der ersten Endlage sehr genau vorgegeben werden. Vorteilhaft ist mindestens ein Bypasskanal zum Drosselelement vorgesehen, dessen freier Strömungsquerschnitt insbesondere bei der Herstellung des Arbeitsgeräts genau eingestellt wird, beispielsweise über eine Stellschraube. Dadurch kann der freie Strömungsquerschnitt und damit die Luftmenge beim Start und Leerlauf sehr genau eingestellt werden und ist nicht von der Genauigkeit des freien Strömungsquerschnitts bei einer teilweise geöffneten Startstellung der Drosselklappe abhängig.

Vorteilhaft wird die Steuereinrichtung vom Startmodus in den Betriebsmodus verstellt, wenn das Drosselelement vom Bediener aus der ersten Endlage in Richtung auf die zweite Endlage verstellt wird. Der Startmodus wird demnach deaktiviert, wenn der Bediener das Drosselelement öffnet, also Gas gibt. Auch die Deaktivierung des Startmodus findet nur in der Steuereinrichtung statt. Eine mechanische Betätigung von Komponenten des Arbeitsgeräts durch die Steuereinrichtung zur Verstellung des Arbeitsgeräts vom Startmodus in den Betriebsmodus ist nicht vorgesehen.

Es kann vorgesehen sein, dass ein Verstellen der Steuereinrichtung vom Startmodus in den Betriebsmodus frühestens dann erfolgt, wenn mindestens eine Verbrennung im Brennraum des Verbrennungsmotors stattgefunden hat. In bevorzugter Gestaltung erfolgt eine Verstellung der Steuereinrichtung vom Startmodus in den Betriebsmodus frühestens dann, wenn eine vorgegebene Anzahl von Motorzyklen nach der ersten Verbrennung des Verbrennungsmotors nach dem Starten stattgefunden hat. Die vorgegebene Anzahl von Motorzyklen sind vorteilhaft 5 Motorzyklen bis 100 Motorzyklen. Erst wenn die vorgegebene, insbesondere in der Steuereinrichtung gespeicherte Anzahl von Motorzyklen durchlaufen wurde, bewirkt eine Verstellung des Drosselelements vom Bediener aus der ersten Endlage in Richtung auf die zweite Endlage, dass die Steuereinrichtung vom Startmodus in den Betriebsmodus verstellt wird. Solange die vorgegebene Anzahl von Motorzyklen nicht durchlaufen wurde, bewirkt eine Verstellung des Drosselelements vom Bediener aus der ersten Endlage in Richtung auf die zweite Endlage keine Verstellung in den Betriebsmodus.

Wenn das Drosselelement vom Bediener aus der ersten Endlage in Richtung auf die zweite Endlage verstellt wird, vergrößert sich der freie Strömungsquerschnitt im Ansaugkanal. Die Verstellung des Drosselelements aus der ersten Endlage in Richtung auf die zweite Endlage kann daher auf einfache Weise über einen Drucksensor mittels des Drucks stromab des Drosselelements erfasst werden. Die Verstellung vom Startmodus in den Betriebsmodus kann vorteilhaft anhand des Drucks stromab des Drosselelements erfolgen. In alternativer vorteilhafter Gestaltung kann auch ein Sensor vorgesehen sein, der detektiert, wenn das Drosselelement mindestens teilweise, insbesondere vollständig geöffnet ist. Alternativ kann auch vorgesehen sein, die Drehzahl des Verbrennungsmotors zu überwachen und die Steuereinrichtung vom Startmodus in den Betriebsmodus zu verstellen, wenn eine Drehzahlschwelle überschritten wurde.

Vorteilhaft begrenzt die Steuereinrichtung die Drehzahl des Verbrennungsmotors im Startmodus auf eine Startdrehzahl. Die Begrenzung der Drehzahl des Verbrennungsmotors im Startmodus erfolgt vorteilhaft durch Verstellung des Zündzeitpunkts und/oder durch Unterdrückung des Zündfunkens und/oder durch Veränderung der zugeführten Kraftstoffmenge.

Der Verbrennungsmotor treibt das Werkzeug über eine Fliehkraftkupplung an. Die Fliehkraftkupplung besitzt vorteilhaft einen Einkuppeldrehzahlbereich, der sich von einer unteren Einkuppeldrehzahl bis zu einer oberen Einkuppeldrehzahl erstreckt. Unterhalb der unteren Einkuppeldrehzahl ist das Abtriebsteil der Fliehkraftkupplung nicht vom Antriebsteil angetrieben. Oberhalb der oberen Einkuppeldrehzahl besitzen Antriebsteil und Abtriebsteil die gleiche Drehzahl. Zwischen der unteren und der oberen Einkuppeldrehzahl findet der Einkuppelvorgang statt, und das Antriebsteil nimmt das Abtriebsteil bei steigender Drehzahl immer mehr mit. Um sicherzustellen, dass das Werkzeug im Startmodus nicht angetrieben werden kann, ist vorgesehen, dass die untere Einkuppeldrehzahl mindestens 25% oberhalb der Startdrehzahl liegt. Dadurch ist ein großer Sicherheitsabstand zwischen der Startdrehzahl und der Einkuppeldrehzahl eingehalten. Dies ist insbesondere bei Arbeitsgeräten vorgesehen, bei denen neben dem Ziehen am Anwerfseil keine weitere Betätigung eines Bedienelements zum Starten des Verbrennungsmotors, insbesondere auch keine manuelle Betätigung einer Starteinrichtung des Verbrennungsmotors, benötigt wird.

Vorteilhaft besitzt der Verbrennungsmotor einen Temperatursensor, der die Temperatur im Kurbelgehäuseinnenraum erfasst. Das Signal des Temperatursensors ist insbesondere der Steuereinrichtung zugeführt. Die Temperatur im Kurbelgehäuseinnenraum wird von der Steuereinrichtung insbesondere gemeinsam mit weiteren Einflussgrößen genutzt, um zu entscheiden, ob beim Starten des Verbrennungsmotors ein Warmstart oder ein Kaltstart vorliegt und Kraftstoffmenge und Zündzeitpunkt entsprechend geeignet steuern. Die zugeführte Kraftstoffmenge und der Zündzeitpunkt werden insbesondere im Startmodus in Abhängigkeit der Temperatur im Kurbelgehäuseinnenraum angesteuert. Die Unterscheidung zwischen Kaltstart und Warmstart erfolgt vorteilhaft automatisch über die Steuereinrichtung.

Vorteilhaft weist das handgetragene Arbeitsgerät einen weiteren Temperatursensor auf, der die Umgebungstemperatur und/oder die Ansaugtemperatur erfasst. Der weitere Temperatursensor ist vorteilhaft in der Nähe der Außenseite des handgetragenen Arbeitsgerätes angeordnet. Mittels der Daten aus einem Temperatursensor, der die Kurbelgehäusetemperatur erfasst und dem weiteren Temperatursensor, der die Umgebungstemperatur und/oder die Ansaugtemperatur erfasst, kann eine Unterscheidung zwischen Warmstart und Kaltstart einfacher erfolgen.

Vorteilhaft besitzt das Kraftstoffventil eine Mündungsöffnung, die stromab des Drosselelements in den Ansaugkanal mündet. Vorteilhaft wird die gesamte dem Verbrennungsmotor zuzuführende Kraftstoffmenge über ein einziges Kraftstoffventil zugeführt. Es ist vorgesehen, dass der Ansaugkanal über ein Einlassfenster in den Kurbelgehäuseinnenraum mündet, wobei das Einlassfenster von einem Kolben des Verbrennungsmotors gesteuert ist. Das Kraftstoffventil führt den Kraftstoff dem Kurbelgehäuseinnenraum vorteilhaft bei geöffnetem Einlassfenster durch den Ansaugkanal zu. Das Kraftstoffventil ist dabei vorteilhaft so ausgerichtet, dass aus der Mündungsöffnung des Kraftstoffventils austretender Kraftstoff im oberen Totpunkt des Kolbens in gerader Linie in den Kurbelgehäuseinnenraum einströmen kann. Dadurch kann insbesondere im Leerlauf die im Ansaugkanal verbleibende und sich an den Ansaugkanalwänden niederschlagende Menge an Kraftstoff minimiert werden. Der Kraftstoff wird weitgehend vollständig unmittelbar dem Kurbelgehäuseinnenraum zugeführt. Der Zeitpunkt, zu dem der Kraftstoff zugeführt wird, muss dabei nicht oder nicht vollständig innerhalb der Zeitspanne liegen, zu der das Einlassfenster geöffnet ist, da sich aufgrund der Druckschwankungen im Ansaugkanal zwischen dem Austritt des Kraftstoffs aus der Mündungsöffnung und dem Eintritt in das Einlassfenster Verzögerungen ergeben können. Vorteilhaft ist das Kraftstoffventil so ausgerichtet, dass aus der Mündungsöffnung des Kraftstoffventils austretender Kraftstoff quer zur Strömungsrichtung im Ansaugkanal, insbesondere unter einem Winkel von 20° bis 160°, bevorzugt etwa senkrecht zur Strömungsrichtung im Ansaugkanal in den Ansaugkanal eintritt.

Zum Anwerfen des Verbrennungsmotors ist bevorzugt ein Startmodus der Steuereinrichtung vorgesehen. Es kann jedoch auch vorgesehen sein, dass der Verbrennungsmotor beim Anwerfen und im Betrieb, insbesondere im Leerlauf, auf die gleiche Weise angesteuert und Kraftstoffmenge und Zündzeitpunkt beim Startvorgang und im Betrieb nach den gleichen Regelalgorithmen geregelt werden.

Ein eigenständiger erfinderischer Gedanke betrifft die Gestaltung eines Gasgestänges eines handgeführten Arbeitsgeräts. Für ein handgeführtes Arbeitsgerät mit einem Verbrennungsmotor zum Antrieb mindestens eines Werkzeugs des Arbeitsgeräts und mit einem Handgriff, an dem ein vom Bediener zu betätigender Gashebel schwenkbar gelagert ist, wobei der Verbrennungsmotor einen Zylinder mit einer Zylinderlängsachse, eine um eine Kurbelwellenachse rotierend angetriebene Kurbelwelle, ein Kraftstoffventil zur Zufuhr von Kraftstoff und einen Ansaugkanal aufweist, wobei ein Abschnitt des Ansaugkanals in einem Drosselgehäuse ausgebildet ist, in dem ein Drosselelement mit einer Lagerwelle schwenkbar gelagert ist, wobei das Arbeitsgerät eine Längsmittelebene besitzt, die die Zylinderlängsachse enthält und senkrecht zur Drehachse der Kurbelwelle verläuft, ist vorgesehen, dass die Lagerwelle einen Winkel von weniger als 10° mit der Längsmittelebene einschließt, dass das Drosselelement an einem aus dem Drosselgehäuse ragenden Koppelabschnitt der Lagerwelle über ein Gasgestänge mit dem Gashebel gekoppelt ist, und dass der Koppelabschnitt an dem Ende der Lagerwelle angeordnet ist, das in Abstellposition des Arbeitsgeräts der Abstellfläche zugewandt liegt.

Die Abstellposition des Arbeitsgeräts ist dabei eine Position des Arbeitsgeräts, in der das Arbeitsgerät auf einer horizontalen, ebenen Abstellfläche abgestellt ist. Das Arbeitsgerät kann beispielsweise mit zum Abstellen des Arbeitsgeräts vorgesehenen Stellfüßen oder mit einer Unterseite des Arbeitsgeräts auf der Abstellfläche abgestellt sein.

Dadurch, dass die Kopplung zwischen Lagerwelle und Gasgestänge an einem Koppelabschnitt erfolgt, der aus dem Drosselgehäuse ragt und an dem Ende der Lagerwelle angeordnet ist, das in Abstellposition des Arbeitsgeräts der Abstellfläche zugewandt liegt, kann ein sehr geringer Abstand zwischen Koppelabschnitt und Gashebel erreicht werden. Dadurch wird ein sehr kurzes Gasgestänge möglich, was zu geringen Toleranzen führt. Auch die Eigenflexibilität des Gasgestänges kann gering gehalten werden, was zu einem guten Ansprechverhalten führt. Durch die Anordnung der Lagerwelle unter einem Winkel von weniger als 10° zur Längsmittelebene ergibt sich eine toleranzarme, einfache Gestaltung, da die Betätigungsbewegung des Gashebels und die Betätigungsbewegung des Koppelabschnitts als Drehbewegungen um zueinander etwa senkrecht stehende Achsen erfolgen.

In bevorzugter Gestaltung verläuft die Drosselwelle parallel zur Längsmittelebene. Vorteilhaft ist der Koppelabschnitt in Abstellposition in der gleichen Höhe wie die Schwenkachse des Gashebels oder oberhalb der Schwenkachse des Gashebels angeordnet. Der Abstand des Koppelabschnitts zur Abstellfläche ist in Abstellposition vorteilhaft mindestens so groß wie der Abstand der Schwenkachse des Gashebels zur Abstellfläche. Dadurch ergibt sich eine vorteilhafte Anordnung der Komponenten, und es wird ein kurzes, toleranzarmes Gasgestänge ermöglicht.

Bevorzugt besitzt das Drosselgehäuse genau zwei Befestigungspunkte zur Fixierung an einem Gehäuseteil des Arbeitsgeräts. Die Befestigungspunkte sind dabei vorteilhaft bezüglich der Mittelachse des Koppelabschnitts symmetrisch angeordnet. Vorteilhaft schließt bei Blickrichtung in Richtung der Ansaugkanallängsachse eine Verbindungslinie zwischen einem Befestigungspunkt und der Ansaugkanallängsachse mit der Mittelachse des Koppelabschnitts einen Winkel von 80° bis 100°, insbesondere von 90° um die Ansaugkanallängsachse ein. Die Befestigungspunkte sind bevorzugt zu einer die Lagerwellenachse und die Ansaugkanallängsachse enthaltenden Ebene symmetrisch angeordnet. Dadurch können Verspannungen der Lagerwellenachse gering gehalten werden, so dass auch hier hohe Genauigkeiten erreicht werden, da mechanische Toleranzen gering sind. Die Lagerwellenachse und die Mittelachse des Koppelabschnitts fallen vorteilhaft zusammen und bezeichnen die gleiche Achse.

Vorteilhaft ist der Durchmesser des Ansaugkanals im Drosselgehäuse konstant. Die in Richtung der Ansaugkanallängsachse gemessene Dicke des Drosselgehäuses ist vorteilhaft vergleichsweise klein. Bevorzugt beträgt die in Richtung der Ansaugkanallängsachse gemessene Dicke des Drosselgehäuses weniger als das 0,5fache des Durchmessers des Ansaugkanals im Drosselgehäuse. Bevorzugt ist ein einziges Drosselelement im Drosselgehäuse angeordnet. Der Handgriff und das Drosselgehäuse sind von dem Zylinder des Verbrennungsmotors vorteilhaft schwingungsentkoppelt. Zwischen dem Handgriff und dem Drosselgehäuse können sich dadurch keine oder nur sehr geringe vibrationsbedingte Verschiebungen ergeben. Der Handgriff und das Drosselgehäuse sind vorzugsweise fest miteinander verbunden. Der Handgriff ist insbesondere an einem Tankgehäuse des Arbeitsgeräts ausgebildet. An dem Tankgehäuse ist das Drosselgehäuse fixiert. Das Tankgehäuse ist vorteilhaft ein Griffgehäuse, an dem mindestens ein Handgriff des Arbeitsgeräts angeordnet ist und das von dem Verbrennungsmotor schwingungsentkoppelt ist.

Das Drosselgehäuse ist vorteilhaft an einem Gehäuseteil des Arbeitsgeräts fixiert, und an dem Gehäuseteil ist ein Anschlag zur Festlegung der Volllaststellung des Drosselelements angeordnet. Dadurch werden geringe Toleranzen bei der Lage des Drosselelements in Volllaststellung erreicht. Insbesondere ist auch der Gashebel an diesem Gehäuseteil gelagert. Das Gehäuseteil ist bevorzugt das Tankgehäuse oder Griffgehäuse.

Ein Ausführungsbeispiel der Erfindung wird im Folgenden anhand der Zeichnung erläutert. Es zeigen:
- Fig. 1: eine perspektivische Darstellung eines Arbeitsgeräts,
- Fig. 2: eine schematische Seitenansicht des Arbeitsgeräts aus Fig. 1,
- Fig. 3: eine schematische Schnittdarstellung durch das Arbeitsgerät aus den Fig. 1 und 2,
- Fig. 4: eine Seitenansicht des Arbeitsgeräts von der Seite des hinteren Handgriffs aus gesehen,
- Fig. 5: eine ausschnittsweise Schnittdarstellung durch das Arbeitsgerät entlang der Linie V-V in Fig. 4,
- Fig. 6 und Fig. 7: perspektivische Darstellungen des Bereichs des Drosselelements und des Gasgestänges des Arbeitsgeräts, wobei Gehäusedeckel und Luftfilter demontiert sind,
- Fig. 8: eine ausschnittsweise Schnittdarstellung entsprechend Fig. 5 mit dem Kolben im oberen Totpunkt,
- Fig. 9: eine Seitenansicht von Drosselgehäuse, Gasgestänge, Gashebel und Gashebelsperre in einer ersten Endstellung des Drosselelements,
- Fig. 10: eine Seitenansicht der Anordnung aus Fig. 9 in einer zweiten Endstellung des Drosselelements,
- Fig. 11: eine Seitenansicht des Drosselgehäuses mit darin angeordnetem Drosselelement,
- Fig. 12: eine perspektivische Darstellung von Drosselgehäuse und Drosselelement,
- Fig. 13: ein schematisches Diagramm, das exemplarisch einen möglichen Verlauf des Zündzeitpunkts über der Drehzahl des Verbrennungsmotors zeigt,
- Fig. 14: ein schematisches Blockschaltbild eines Startreglers,
- Fig. 15: ein schematisches Blockschaltbild eines Betriebsreglers.

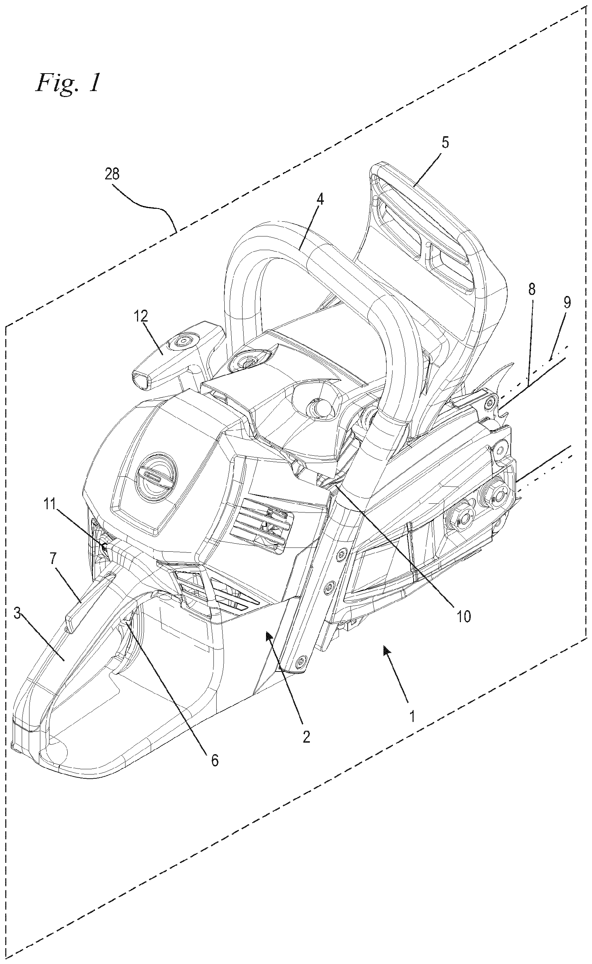

Fig. 1 zeigt in perspektivischer Darstellung ein Arbeitsgerät 1, das im Ausführungsbeispiel als Motorsäge ausgebildet ist. Das Arbeitsgerät 1 kann auch ein anderes handgeführtes Arbeitsgerät wie beispielsweise ein Trennschleifer, ein Freischneider, ein Blasgerät oder dgl. sein. Bei einem Blasgerät bildet das Gebläserad zur Förderung von Arbeitsluft das Werkzeug.

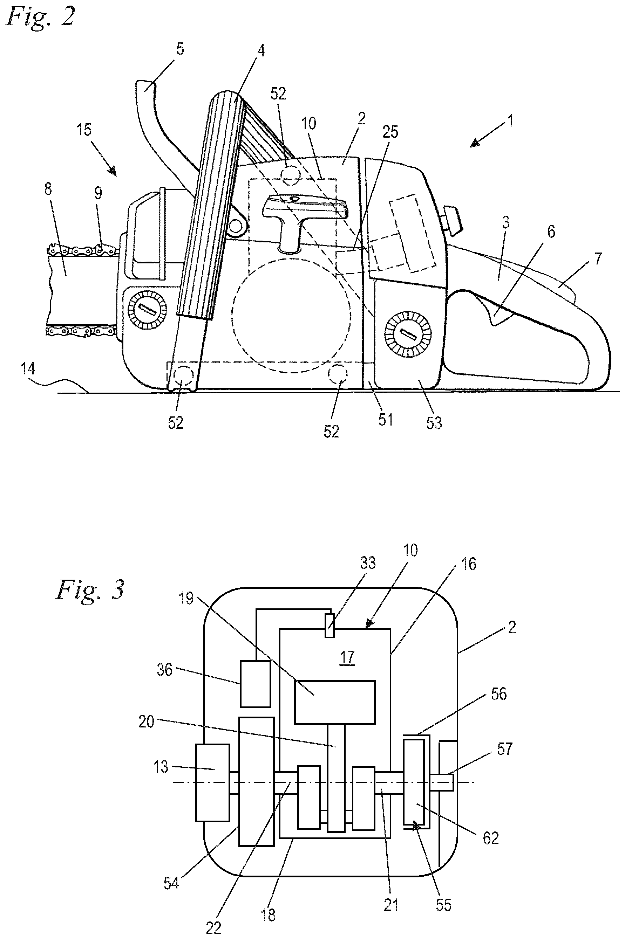

Das Arbeitsgerät 1 besitzt ein Gehäuse 2, das im Ausführungsbeispiel aus mehreren Bauteilen zusammengesetzt ist. Zum Führen des Arbeitsgeräts 1 im Betrieb sind ein hinterer Handgriff 3 sowie ein Griffrohr 4 vorgesehen. Am hinteren Handgriff 3 sind ein Gashebel 6 sowie eine Gashebelsperre 7 schwenkbar gelagert. Das Arbeitsgerät 1 besitzt eine in Fig. 1 schematisch dargestellte Führungsschiene 8, an der eine ebenfalls schematisch dargestellte Sägekette 9 umlaufend angetrieben ist. Die Sägekette 9 bildet das Werkzeug des Arbeitsgeräts 1 und ist von einem im Gehäuse 2 angeordneten Verbrennungsmotor 10 angetrieben. An der der Führungsschiene 8 zugewandten Seite des Griffrohrs 4 verläuft ein Handschutz 5. Der Handschutz 5 ist vorteilhaft schwenkbar gelagert und dient zum Auslösen einer Kettenbremseinrichtung. Wie Fig. 1 auch zeigt, ist am Gehäuse 2 benachbart zum hinteren Handgriff 3 ein Stopptaster 11 angeordnet, mit dem ein Bediener den Verbrennungsmotor 10 ausschalten kann. Zum Starten des Verbrennungsmotors 10 ist ein in Fig. 1 nicht dargestellter Seilzugstarter 13 (Fig. 3) vorgesehen, dessen Anwerfgriff 12 aus dem Gehäuse 2 ragt. In Fig. 1 ist außerdem schematisch eine Längsmittelebene 28 des Arbeitsgeräts eingezeichnet, die im Ausführungsbeispiel parallel zur Ebene der Führungsschiene 8 verläuft. Der Verlauf der Längsmittelebene 28 wird im Folgenden noch näher beschrieben.

Fig. 2 zeigt das Arbeitsgerät 1 in einer Abstellposition 15, in der das Arbeitsgerät 1 auf einer horizontalen, ebenen Abstellfläche 14 abgestellt ist. Im Ausführungsbeispiel liegt das Arbeitsgerät 1 mit einem Abschnitt des Griffrohrs 4, der an der Unterseite des Arbeitsgeräts 1 verläuft, sowie der Unterseite des Gehäuses 2 im Bereich des hinteren Handgriffs 3 auf der Abstellfläche 14 auf. Das Gehäuse 2 umfasst ein Griffgehäuse 51, das über Antivibrationselemente 52 mit dem Verbrennungsmotor 10 verbunden ist. Die Antivibrationselemente 52 sind in Fig. 2 schematisch dargestellt. Über die Antivibrationselemente 52 ist das Griffgehäuse 51 vom Verbrennungsmotor 10 schwingungsdämpfend entkoppelt. Am Griffgehäuse 51 sind der hintere Handgriff 3 sowie das Griffrohr 4 angeordnet. Das Griffgehäuse 51 umfasst im Ausführungsbeispiel auch einen Kraftstofftank 53. Der Kraftstofftank 53 ist bevorzugt integral mit dem Griffgehäuse 51 ausgebildet. Das Griffgehäuse 51 kann daher auch als Tankgehäuse bezeichnet werden.

Fig. 3 zeigt den Aufbau des Antriebs der Sägekette 9 im Einzelnen. In Fig. 3 ist der Seilzugstarter 13 schematisch dargestellt. Das Arbeitsgerät 1 besitzt ein Lüfterrad 54, das zur Förderung von Kühlluft für den Verbrennungsmotor 10 dient. Das Lüfterrad 54 ist drehfest mit einer Kurbelwelle 21 des Verbrennungsmotors 10 verbunden. Der Verbrennungsmotor 10 besitzt einen Zylinder 16, in dem ein Brennraum 17 ausgebildet ist. Der Brennraum 17 ist von einem Kolben 19 begrenzt, der im Zylinder 16 hin und her gehend gelagert ist. Der Kolben 19 treibt über ein Pleuel 20 die Kurbelwelle 21 um eine Drehachse 22 rotierend an. In den Brennraum 17 ragt eine Zündkerze 33. Die Zündkerze 33 ist von einer Steuereinrichtung 36 angesteuert. Die Steuereinrichtung 36 kann eine Magnetzündeinrichtung umfassen, in der die Energie zum Auslösen des Zündfunkens von am Außenumfang des Lüfterrads 54 angeordneten, nicht gezeigten Magneten induziert wird. In vorteilhafter alternativer Gestaltung kann die Steuereinrichtung 36 von einem Generator mit Energie versorgt werden. Die Steuereinrichtung 36 legt fest, ob ein Zündfunke ausgelöst wird und zu welchem Zeitpunkt eines Motorzyklus der Zündfunke erzeugt wird.

Die Kurbelwelle 21 ist über eine Fliehkraftkupplung 55 mit einem Antriebsritzel 57 verbunden, das die Sägekette 9 (Fig. 2) antreibt. Das Antriebsritzel 57 ist mit einem Abtriebsteil 56 der Fliehkraftkupplung 55, im Ausführungsbeispiel einer Kupplungstrommel, verbunden. Die Fliehkraftkupplung 55 umfasst außerdem ein Antriebsteil 62, das drehfest mit der Kurbelwelle 21 verbunden ist. Das Antriebsteil 62 umfasst vorteilhaft nicht gezeigte Fliehgewichte, die oberhalb eines Einkuppeldrehzahlbereichs eine drehfeste Verbindung zwischen Antriebsteil 62 und Abtriebsteil 56 herstellen.

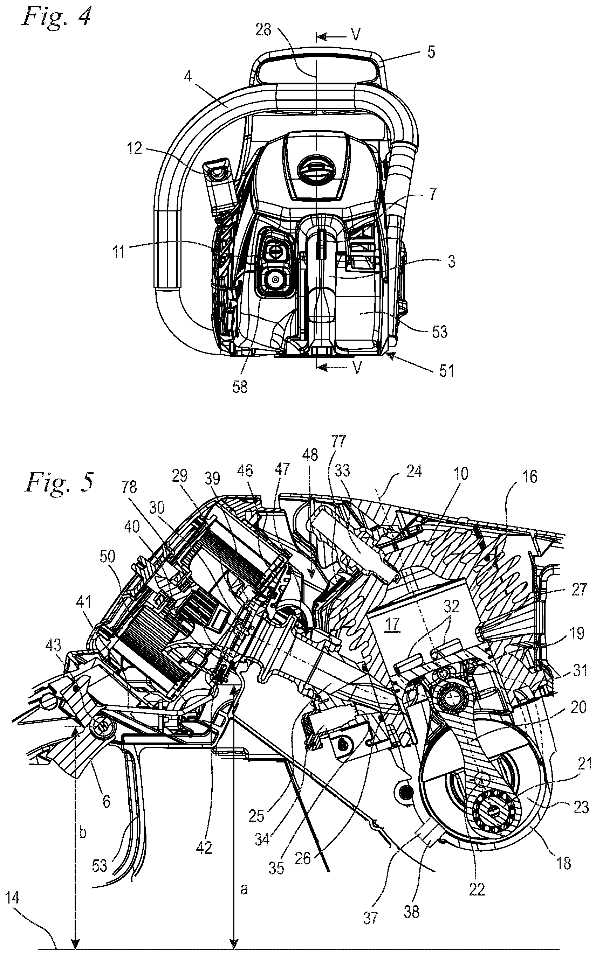

In Fig. 4 ist der Stopptaster 11 erkennbar. Im Ausführungsbeispiel ist unterhalb des Stopptasters 11 ein Purgerbalg 58 angeordnet. Zum Fluten des Kraftstoffsystems kann der Bediener den Purgerbalg 58 vor dem Anwerfen des Verbrennungsmotors 10 betätigen. Wie die Figuren 1 und 4 auch zeigen, sind keine Elemente zum Einlegen einer Startstellung wie beispielsweis ein Betriebsartensteller oder dgl. vorhanden.

Die Fig. 4 und 5 zeigen auch die Lage der Längsmittelebene 28. Wie Fig. 4 zeigt, verläuft die Längsmittelebene 28 im Ausführungsbeispiel in Längsrichtung des hinteren Handgriffs 3 und quer zum Griffrohr 4. Die Längsmittelebene 28 enthält eine in Fig. 5 gezeigte Zylinderlängsachse 24.

Fig. 5 zeigt den Aufbau des Verbrennungsmotors 10 im Einzelnen. Der Verbrennungsmotor 10 besitzt einen Ansaugkanal 25, über den im Betrieb Verbrennungsluft angesaugt wird. Der Ansaugkanal 25 besitzt eine Ansaugkanallängsachse 47. Die Ansaugkanallängsachse 47 verbindet die Flächenschwerpunkte der Ansaugkanalfläche in allen Schnitten senkrecht zur Strömungsrichtung im Ansaugkanal 25. Der Ansaugkanal 25 ist mit dem Reinraum eines Luftfilters 50 verbunden. Im Ansaugkanal 25, im Ausführungsbeispiel benachbart zum Eintritt in den Ansaugkanal 25, ist ein Drosselelement 30 im Ansaugkanal 25 angeordnet. Das Drosselelement 30 ist in einem Drosselgehäuse 29 um eine Lagerwellenachse 78 schwenkbar gelagert. Das Drosselgehäuse 29 ist an einer Trennwand 46 fixiert. Die Trennwand 46 ist vorteilhaft einteilig mit dem Kraftstofftank 53 ausgebildet. Die Trennwand 46 trennt den Raum, in dem der Filter 50 angeordnet ist, von einem Zwischenraum 48. Der Zwischenraum 48 ist seinerseits über eine Trennwand 77 vom Zylinder 16 des Verbrennungsmotors 10 getrennt. Über den Zwischenraum 48 und die Trennwände 47 und 77 ergibt sich eine verbesserte thermische Entkopplung zwischen dem Luftfilter 50 und dem Verbrennungsmotor 10.

Das Drosselgehäuse 29 ist vorteilhaft wie der Handgriff 3 am Griffgehäuse 51 fixiert und daher über die Antivibrationselemente 52 vom Verbrennungsmotor 10 schwingungsentkoppelt. Der Handgriff 3 und das Drosselgehäuse 29 sind fest miteinander verbunden.

Am Ansaugkanal 25 ist ein in Fig. 5 schematisch dargestelltes Kraftstoffventil 34 angeordnet. Das Kraftstoffventil 34 besitzt eine ebenfalls schematisch dargestellte Mündungsöffnung 35 in den Ansaugkanal 25. Die Mündungsöffnung 35 des Kraftstoffventils 34 mündet stromab des Drosselelements 30 in den Ansaugkanal 25. Die Angabe "stromab" bezieht sich dabei auf die Strömungsrichtung vom Luftfilter 50 zum Kurbelgehäuseinnenraum 23. Der Verbrennungsmotor 10 besitzt vorzugsweise nur ein einziges Kraftstoffventil 34. Die gesamte dem Verbrennungsmotor zuzuführende Kraftstoffmenge wird über das vorzugsweise einzige Kraftstoffventil 34 zugeführt. Der Ansaugkanal 25 mündet mit einem Einlassfenster 26 an einer Zylinderbohrung des Zylinders 16. Das Einlassfenster 26 ist vorteilhaft vom Kolben 19 gesteuert. Das Einlassfenster 26 wird beim Aufwärtshub des Kolbens 19 im Bereich des oberen Totpunkts des Kolbens 19 zu einem Kurbelgehäuseinnenraum 23 geöffnet.

Fig. 5 zeigt den Kolben 19 in seinem unteren Totpunkt. Im unteren Totpunkt liegt der Kolben 19 in Überdeckung mit dem Einlassfenster 26 und verschließt das Einlassfenster 26. Das Kurbelgehäuse 18 besitzt einen Kurbelgehäuseinnenraum 23, in dem die Kurbelwelle 21 angeordnet ist. Der Kurbelgehäuseinnenraum 23 ist im Bereich des unteren Totpunkts des Kolbens 19 über einen oder mehrere Überströmkanäle 31 mit dem Brennraum 17 verbunden. Im Ausführungsbeispiel ist vorteilhaft ein Überströmkanal 31 vorgesehen, der sich in Richtung auf den Brennraum 17 in mehrere Äste aufgabelt und mit mehreren Überströmfenstern 32 in den Brennraum 17 mündet. Auch eine andere Gestaltung von einem oder mehreren Überströmkanälen 31 kann vorteilhaft sein. Aus dem Brennraum 17 führt ein Auslassfenster 27. Das Auslassfenster 27 ist vorteilhaft ebenfalls vom Kolben 19 gesteuert.

Wie Fig. 5 auch zeigt, sind am Kurbelgehäuse 18 ein Drucksensor 37 und ein Temperatursensor 38 angeordnet. Der Drucksensor 37 und der Temperatursensor 38 sind in vorteilhafter Gestaltung als kombinierter Drucktemperatursensor ausgeführt. Der Drucksensor 37 misst den Druck im Kurbelgehäuseinnenraum 23. Der Temperatursensor 38 misst die Temperatur im Kurbelgehäuseinnenraum 23. Die von dem Temperatursensor 38 ermittelte Temperatur wird von der Steuereinrichtung 36 genutzt, um die zuzuführende Kraftstoffmenge und den Zündzeitpunkt ZZP geeignet festzulegen.

Zur Betätigung des Drosselelements 30 ist ein Gasgestänge 41 vorgesehen, das mit einem Koppelabschnitt 40 einer Lagerwelle 39 des Drosselelements 30 verbunden ist. Das andere Ende des Gasgestänges 41 ist am Gashebel 6 eingehängt. Der Gashebel 6 ist um eine Schwenkachse 43 schwenkbar gelagert. In Abstellposition 15 liegt die Lagerwelle 39 des Drosselelements 30 höher als die Schwenkachse 43 des Gashebels 6. Der Abstand a des Koppelabschnitts 40 zur Abstellfläche 14 ist mindestens so groß wie der Abstand b der Schwenkachse 43 zur Abstellfläche 15. Der Abstand a ist dabei von einem aus dem Drosselgehäuse 39 ragenden, der Abstellfläche 15 zugewandten Ende 42 der Lagerwelle 39 gemessen. Im Ausführungsbeispiel wird das Ende 42 der Lagerwelle 39 von einer eingeschraubten Befestigungsschraube gebildet.

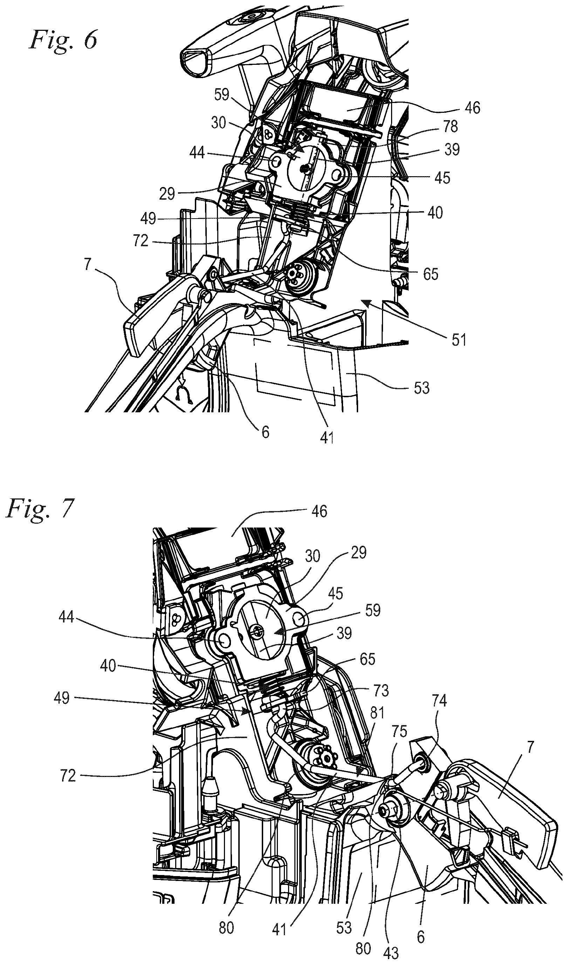

Die Fig. 6 und 7 zeigen die Anordnung des Gasgestänges 41 im Einzelnen. Wie Fig. 6 zeigt, ist das Gasgestänge 41 an einem Drosselhebel 65 eingehängt, der drehfest mit der Lagerwelle 39 verbunden ist. Der Drosselhebel 65 ist dabei am Koppelabschnitt 40 der Lagerwelle 39 fixiert. Das Drosselgehäuse 39 ist an zwei Befestigungspunkten 44 und 45 an der Trennwand 46 festgelegt. Hierzu sind in den Fig. nicht dargestellte Befestigungsbolzen vorgesehen. Wie die Fig. 6 und 7 zeigen, sind die Befestigungspunkte 44 und 45 symmetrisch zu einer Ebene angeordnet, die die Ansaugkanallängsachse 47 (Fig. 5) sowie die Lagerwellenachse 78 der Lagerwelle 39 enthält. Die Lagerwellenachse 78 ist in den Fig. 6 und 5 eingezeichnet.

Wie Fig. 6 auch zeigt, ist am Griffgehäuse 51, nämlich an der Trennwand 46, die vorteilhaft einteilig mit dem Kraftstofftank 53 ausgebildet ist, ein Steg 72 ausgebildet. Der Steg 72 verläuft im Ausführungsbeispiel näherungsweise parallel zur Längsmittelebene 28 (Fig. 1) und zur Lagerwelle 39 des Drosselelements 30. Am Steg 72 ist vorzugsweise ein Anschlag 49 für das Koppelelement 65 vorgesehen. Der Anschlag 49 legt vorteilhaft die vollständig geöffnete Stellung des Drosselelements 30 fest. Dadurch, dass der Anschlag 49 für die vollständig geöffnete Stellung des Drosselelements 30 am Griffgehäuse 51 ausgebildet ist, an dem auch der Gashebel 6 gelagert ist, ergeben sich geringe Lagetoleranzen zwischen dem Gashebel 6 und der Volllaststellung des Drosselelements 30.

Wie Fig. 7 zeigt, besitzt das Gasgestänge 41 ein erstes Ende 73, das am Drosselhebel 65 eingehängt ist. Ein zweites Ende 74 des Gasgestänges 41 ist am Gashebel 6 eingehängt. Am Griffgehäuse 51 ist nahe der Schwenkachse 43 des Gashebels 6 eine Seitenführung 75 für das Gasgestänge 41 ausgebildet. Bei einer Betätigungsbewegung des Gashebels 6 kann sich das Gasgestänge 41 aufgrund der Seitenführung 75 nur parallel zur Längsmittelebene 28 (Fig. 1), nicht jedoch quer zur Längsmittelebene 28 bewegen. Das Gasgestänge 41 verläuft weitgehend parallel zur Längsmittelebene 28. Vorteilhaft verläuft das Gasgestänge 41 weitgehend in der Längsmittelebene 28 oder in geringem Abstand zur Längsmittelebene 28. Das Gasgestänge 41 ist aufgrund des geringen Abstands zwischen dem Gashebel 6 und dem Koppelabschnitt 40 vergleichsweise kurz ausgebildet. Das Gasgestänge 41 besitzt zwei Abkröpfungen 80, die bewirken, dass ein mittlerer Abschnitt 81 des Gasgestänges 41 in Abstellposition 15 näher an der Abstellfläche 14 liegt als die Enden 73 und 74. Dadurch kann das Gasgestänge 41 unter dem Luftfilter 50 hindurchgeführt werden. Auch der mittlere Abschnitt 81 liegt in Abstellposition 15 oberhalb des Kraftstofftanks 53.

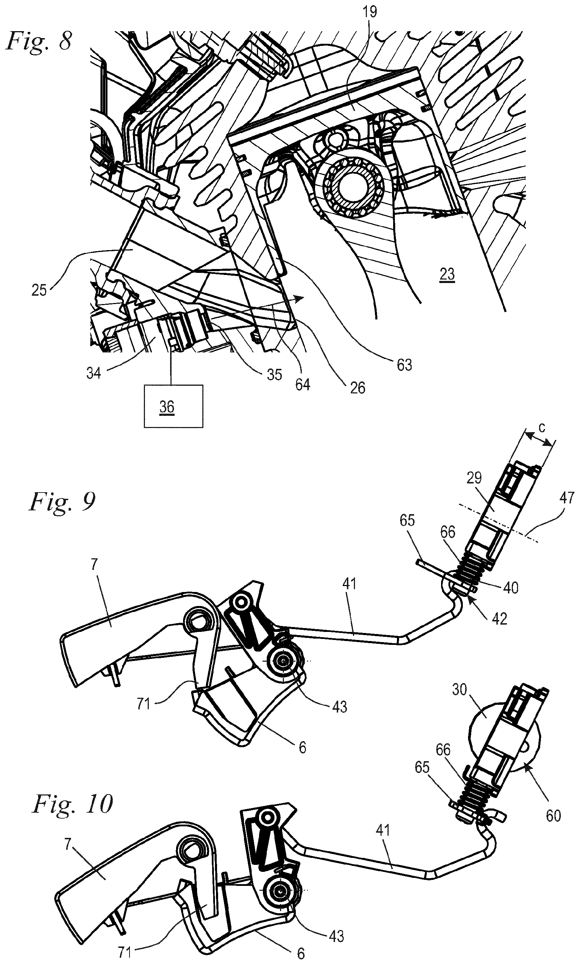

Fig. 8 zeigt den Kolben 19 im oberen Totpunkt. In dieser Position gibt ein Kolbenhemd 63 des Kolbens 19 das Einlassfenster 26 des Ansaugkanals 25 vorteilhaft vollständig frei. Das Kraftstoffventil 34 ist mit seiner Mündungsöffnung 35 so ausgerichtet, dass Kraftstoff entlang des in Fig. 8 eingezeichneten Pfeils 64 in gerader Linie durch den Ansaugkanal 25 und durch das Einlassfenster 26 in den Kurbelgehäuseinnenraum 23 eintreten kann. Dadurch kann insbesondere im Leerlauf ein Benetzen der Wände des Ansaugkanals 25 mit Kraftstoff weitgehend vermieden werden. Im Leerlauf sind Luftmenge und Strömungsgeschwindigkeit üblicherweise gering, so dass keine oder keine nennenswerte Zerstäubung an der Mündungsöffnung 35 des Kraftstoffventils 34 stattfindet. Daher ist insbesondere im Leerlauf eine Ausrichtung der Mündungsöffhung 35 derart, dass der Kraftstoff keinen Kontakt mit Wänden des Ansaugkanals 25 hat, bevor er in den Kurbelgehäuseinnenraum 23 eintritt, vorteilhaft.

Um insbesondere bei Volllast eine gute Gemischaufbereitung und Zerstäubung zu erreichen, ist die Mündungsöffnung 35 vorteilhaft so ausgerichtet, dass der Kraftstoff quer zur Strömungsrichtung im Ansaugkanal 25 aus der Mündungsöffnung 35 austritt. Vorteilhaft beträgt der Winkel zwischen dem Pfeil 64, in dessen Richtung der Kraftstoff aus der Mündungsöffnung 35 austritt, und der Strömungsrichtung im Ansaugkanal 20° bis 160°. In vorteilhafter alternativer Gestaltung ist das Kraftstoffventil 34 so ausgerichtet, dass die Austrittsrichtung des Kraftstoffs etwa senkrecht zur Strömungsrichtung des Ansaugkanals steht.

Aufgrund der im Betrieb entstehenden Pulsationen im Ansaugkanal 25 ist der Öffnungszeitpunkt des Kraftstoffventils 34 vorteilhaft auf die Position des Kolbens 19 abgestimmt. Dabei kann das Kraftstoffventil 34 auch vor dem Öffnen bzw. nach dem Schließen des Einlassfensters 26 öffnen, wenn sich aufgrund der Pulsationen im Ansaugkanal 25 entsprechende Verzögerungen bei der Zufuhr des Kraftstoffs in den Kurbelgehäuseinnenraum 23 ergeben. Wie Fig. 8 schematisch zeigt, ist das Kraftstoffventil 34 mit der Steuereinrichtung 36 verbunden und wird von dieser angesteuert.

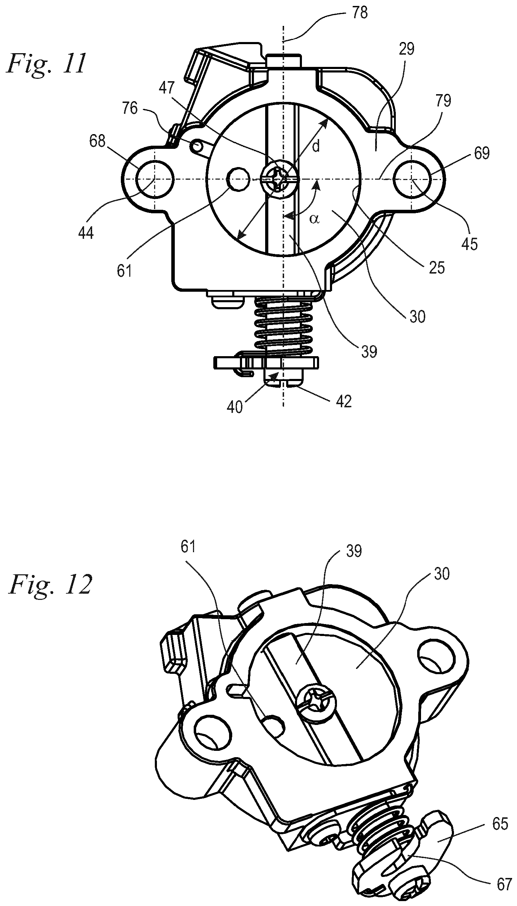

Die Fig. 6 und 7 zeigen das Drosselelement 30 in einer ersten Endlage 59, die dem Leerlauf zugeordnet ist. In der ersten Endlage 59 ist der Ansaugkanal 25 vom Drosselelement 23 bis auf einen Restquerschnitt, der durch eine im Folgenden noch näher beschriebene Öffnung 61 gebildet ist, und bis auf einen im Folgenden noch näher beschriebenen Bypasskanal 76 (Fig. 11) verschlossen. Es kann auch vorgesehen sein, dass das Drosselelement 23 keine Öffnung aufweist und der Restquerschnitt des Ansaugkanals 25 in der ersten Endlage 59 des Drosselelements 23 allein durch einen oder mehrere Bypasskanäle 76 gebildet ist. Fig. 9 zeigt die Anordnung von Gasgestänge 41, Gashebel 6 und Gashebelsperre 7 in der ersten Endlage 59 des Drosselelements 30. Die Gashebelsperre 7 besitzt einen Sperrabschnitt 71, der in unbetätigter Stellung der Gashebelsperre 7 ein Betätigen des Gashebels 6, also ein Verschwenken des Gashebels 6 in Fig. 9 im Uhrzeigersinn, blockiert. Auf den Drosselhebel 65 wirkt eine Rückstellfeder 66, die gegen einen nicht gezeigten, am Gehäuse 2 (Fig. 1) ausgebildeten Anschlag für den Gashebel 6 wirkt. Über den Anschlag am Gehäuse 2 ist die erste Endlage 59 des Drosselelements 30 definiert. Wie Fig. 9 auch zeigt, besitzt das Drosselgehäuse 29 eine parallel zur Ansaugkanallängsachse 47 gemessene Dicke c.

Fig. 10 zeigt die Anordnung in einer zweiten Endlage 60 des Drosselelements 30. In der zweiten Endlage 60 ist das Drosselelement 30 maximal geöffnet und liegt vorteilhaft etwa parallel zur Ansaugkanallängsachse 47 (Fig. 5). Die zweite Endlage 60 ist durch den Anschlag 49 (Fig. 6 und 7) definiert, der ein weiteres Verschwenken des Drosselhebels 65 verhindert. Wie Fig. 10 zeigt, ragt der Sperrabschnitt 71 in betätigter Stellung von Gashebelsperre 7 und Gashebel 6 in eine im Gashebel 6 ausgebildete Tasche und gibt dadurch das Verschwenken des Gashebels 6 um seine Schwenkachse 43 frei. Die zweite Endlage 60 ist der Volllast zugeordnet.

Die Fig. 11 und 12 zeigen die Gestaltung des Drosselelements 30 und des Drosselgehäuses 29 im Einzelnen. Das Drosselgehäuse 29 besitzt zwei Befestigungsöffnungen 68 und 69, die im Ausführungsbeispiel als Bohrungen mit rundem Querschnitt ausgeführt sind. Die Längsmittelachsen der Öffnungen 68 und 69 bilden die Befestigungspunkte 44 und 45. Der Ansaugkanal 25 besitzt im Drosselgehäuse 29 einen Durchmesser d, der deutlich kleiner als die Dicke c (Fig. 9) des Drosselgehäuses 29 ist. Die Dicke c des Drosselgehäuses 29 ist vorteilhaft kleiner als das 0,5fache des Durchmessers d des Ansaugkanals 25 im Drosselgehäuse 29. Der Durchmesser d des Ansaugkanals 25 ist im Drosselgehäuse 29 konstant. Der Koppelabschnitt 40 besitzt eine Mittelachse, die, wie Fig. 11 zeigt, mit der Lagerwellenachse 78 der Lagerwelle 39 zusammenfällt. Fig. 11 zeigt die Anordnung etwa in Blickrichtung der Ansaugkanallängsachse 47. In dieser Blickrichtung liegen die beiden Befestigungspunkte 44 und 45 auf einer Verbindungslinie 79, die senkrecht zur Lagerwellenachse 78 verläuft. Die Verbindungslinie 79, die jeweils einen Befestigungspunkt 44 bzw. 45 mit der Ansaugkanallängsachse 47 in dieser Blickrichtung verbindet, verläuft zur Lagerwellenachse 78 unter einem Winkel a, der vorteilhaft 80° bis 100° beträgt. Im Ausführungsbeispiel beträgt der Winkel α 90°. Die Befestigungspunkte 44 und 45 sind zu einer die Lagerwellenachse 78 und die Ansaugkanallängsachse 47 enthaltenden Ebene symmetrisch ausgebildet. Wie die Fig. 11 und 12 auch zeigen, besitzt das Drosselelement 30 eine Öffnung 61. Die Öffnung 61 besitzt einen definierten Durchmesser. Im Drosselgehäuse 29 ist außerdem ein Bypasskanal 76 ausgebildet, der einen Bypass zum Drosselelement 30 bildet. Der Bypasskanal 76 besitzt vorteilhaft ein nicht gezeigtes Einstellelement, mit dem der freie Strömungsquerschnitt des Bypasskanals 76 bei der Herstellung des Arbeitsgeräts 1 genau eingestellt werden kann. Die Öffnung 61 und der Bypasskanal 76 legen in der ersten Endlage 59 des Drosselelements 30 den freien Strömungsquerschnitt des Ansaugkanals 25 fest. Im Ausführungsbeispiel ist genau eine Öffnung 61 im Drosselelement 30 vorgesehen. Auch eine andere Anzahl von Öffnungen 61 im Drosselelement 30 zur Festlegung eines definierten Strömungsquerschnitts kann jedoch vorteilhaft sein.

Wie Fig. 12 zeigt, besitzt der Drosselhebel 65 einen Schlitz 67, an dem das Gasgestänge 41 mit seinem Ende 73 einzuhängen ist.

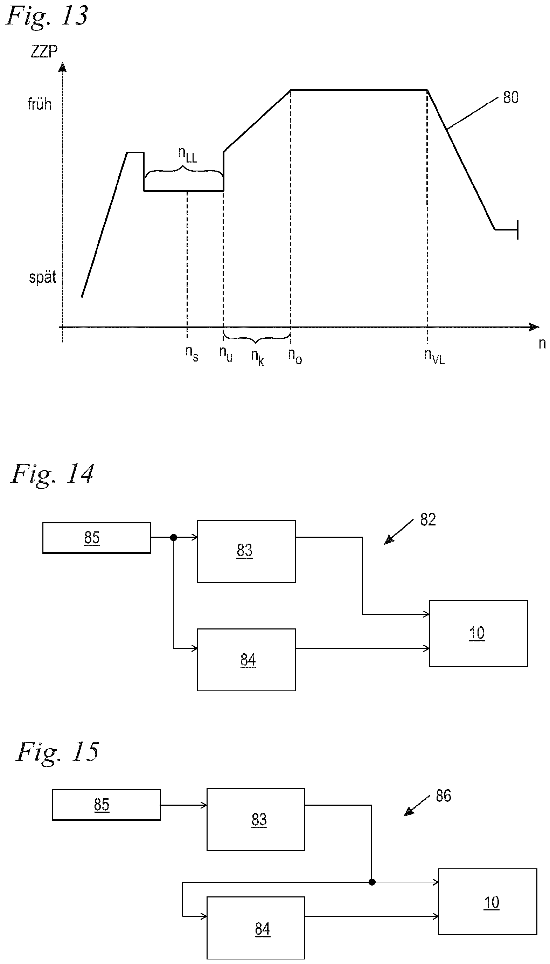

Fig. 13 zeigt ein Diagramm, das die Steuerung des Zündzeitpunkts ZZP über der Drehzahl n des Verbrennungsmotors 10 zeigt. Wie Fig. 13 zeigt, bedeuten niedrige Werte für den Zündzeitpunkt ZZP im Diagramm einen späten Zündzeitpunkt ZZP und hohe Werte für den Zündzeitpunkt ZZP im Diagramm einen frühen Zündzeitpunkt ZZP. Der Zündzeitpunkt ZZP ist über der Drehzahl n als Linie 80 eingetragen. Wie Fig. 13 zeigt, besitzt der Verbrennungsmotor 10 einen Leerlaufdrehzahlbereich n_{LL}, der sich bis zu einem Einkuppeldrehzahlbereich nₖ erstreckt. Der Einkuppeldrehzahlbereich nₖ erstreckt sich von einer unteren Einkuppeldrehzahl nᵤ bis zu einer oberen Einkuppeldrehzahl nₒ. Von der oberen Einkuppeldrehzahl nₒ bis zu einer Volllastdrehzahl n_{VL} bleibt der Zündzeitpunkt ZZP konstant auf einem frühen Wert. An die Volllastdrehzahl n_{VL} schließt sich ein Abregeldrehzahlbereich an, an dem der Zündzeitpunkt ZZP zur Begrenzung der Drehzahl nach "spät" verstellt wird.

Die Steuereinrichtung 36 des Arbeitsgeräts 1 steuert die Zündkerze 33 und das Kraftstoffventil 34 an. Das Arbeitsgerät 1 besitzt einen Startmodus, in dem der Verbrennungsmotor 10 über den Seilzugstarter 13 gestartet werden kann. Das Arbeitsgerät 1 besitzt außerdem einen Betriebsmodus, in dem der Bediener den Verbrennungsmotor 10 durch Betätigen des Gashebels 6, also durch Verstellen des Drosselelements 30, zur Veränderung der Drehzahl n des Verbrennungsmotors 10 ansteuern kann. Das Drosselelement 30 ist das einzige im Ansaugkanal 25 angeordnete verstellbare Drosselelement. Ein Chokeelement ist nicht vorgesehen. Im Startmodus befindet sich das Drosselelement 30, solange der Bediener des Gashebel 6 nicht betätigt, in der ersten Endlage 59 (Fig. 11), in der das Drosselelement 30 den Strömungsquerschnitt im Ansaugkanal 25 bis auf den Querschnitt der Öffnung 61 verschließt. Ein Verstellen des Drosselelements 30 im Startmodus, beispielsweise über mechanische oder elektrische Einrichtungen oder durch den Bediener, ist nicht vorgesehen. Der Betriebsmodus und der Startmodus des Arbeitsgeräts 1 sind im Ausführungsbeispiel Startmodi der Steuereinrichtung 36 und unterscheiden sich allein durch die Steuerung des Zündzeitpunkts ZZP und der zuzuführenden Kraftstoffmenge durch die Steuereinrichtung.

Zum Ausschalten des Verbrennungsmotors 10 betätigt der Bediener den Stopptaster 11. Dadurch wird die Zündung kurzgeschlossen, und die Steuereinrichtung 36 erhält das Signal, dass der Verbrennungsmotor 10 zu stoppen ist.

Da das Arbeitsgerät 1 nach dem Ausschalten über den Stopptaster 11 wieder im Startmodus steht, kann das Arbeitsgerät 1 jederzeit durch Anwerfen des Verbrennungsmotors 10 über den Anwerfgriff 12 gestartet werden. Hierzu muss keine Starteinrichtung betätigt werden. Nach längerem Abstellen des Verbrennungsmotors 10 kann es lediglich notwendig werden, das Kraftstoffsystem manuell zu fluten, nämlich durch Betätigen des Purgerbalgs 58. Beim Startvorgang wird die Drehzahl n von der Steuereinrichtung 36 so gesteuert, dass die Drehzahl n auf eine Startdrehzahl ns begrenzt bleibt. Die Drehzahl n kann daher im Startmodus nicht über die Startdrehzahl n_{S} ansteigen. Die Startdrehzahl n_{S} liegt im Ausführungsbeispiel im Leerlaufdrehzahlbereich n_{LL}. Die Startdrehzahl ns liegt demnach unterhalb der unteren Einkuppeldrehzahl nᵤ. Die untere Einkuppeldrehzahl nᵤ liegt vorteilhaft mindestens 25% oberhalb der Startdrehzahl n_{S}. Dadurch ist sichergestellt, dass ein Werkzeug des Arbeitsgeräts 1 beim Startvorgang nicht über die Kurbelwelle 21 und die Fliehkraftkupplung 55 angetrieben werden kann.

Fig. 14 zeigt schematisch die Regelung von Kraftstoffmenge und Zündzeitpunkt im Startmodus der Steuereinrichtung 36. Vor der ersten Verbrennung sind vorteilhaft Standardwerte für Zündzeitpunkt und zuzuführende Kraftstoffmenge vorgesehen, die in der Steuereinrichtung 36 gespeichert sind. Vorteilhaft werden Kraftstoffmenge und Zündzeitpunkt nach der ersten Verbrennung gemäß dem in Fig. 14 gezeigten Startregler 82 geregelt. Der Startregler 82 besitzt einen Zündzeitpunktregler 83, beispielsweise einen PI-Regler, der den Zündzeitpunkt anhand einer Eingangsgröße 85 regelt. Der Startregler 82 besitzt außerdem einen Kraftstoffregler 84, der die zuzuführende Kraftstoffmenge regelt und der ebenfalls als PI-Regler ausgeführt sein kann. Der Kraftstoffregler 84 regelt den die zuzuführende Kraftstoffmenge ebenfalls anhand der Eingangsgröße 85. Die zuzuführende Kraftstoffmenge und der ermittelte Zündzeitpunkt ZZP werden zur Ansteuerung des Verbrennungsmotors 10 genutzt. Die Drehzahl des Verbrennungsmotors 10 wird erfasst und dient erneut als Eingangsgröße 85 für den Startregler 82, bis der Startregler 82 deaktiviert wird. Auch andere Größen wie Temperatur und Druck können als Eingangsgröße 85 dienen.

Nach dem Starten ist vorgesehen, dass das Arbeitsgerät 1 automatisch vom Startmodus in den Betriebsmodus verstellt wird, wenn das Drosselelement 30 vom Bediener aus der ersten Endlage 59 in Richtung auf die zweite Endlage 60 verstellt wird. Die Verstellung des Drosselelements 30 aus der ersten Endlage 59 in Richtung auf die zweite Endlage 60 wird vorteilhaft über den Drucksensor 37 erfasst. Beim Öffnen des Drosselelements 30 ändert sich der Druck im Kurbelgehäuseinnenraum 23. Dies wird vom Drucksensor 37 erfasst. Der Drucksensor 37 kann dabei im Kurbelgehäuseinnenraum 23 oder im Ansaugkanal 25 stromab des Drosselelements 30 angeordnet sein. Auch eine vom Temperatursensor 38 erfasste Temperatur und/oder der Druck im Kurbelgehäuseinnenraum 23 können zur Deaktivierung des Startmodus der Steuereinrichtung 36 genutzt werden.

In vorteilhafter alternativer Ausführung ist vorgesehen, dass als zusätzliche Bedingung für ein Verstellen des Arbeitsgeräts 1 vom Startmodus in den Betriebsmodus mindestens eine Verbrennung im Brennraum 17 des Verbrennungsmotors 10 stattgefunden haben muss. Vorteilhaft erfolgt eine Verstellung des Arbeitsgeräts 1 vom Startmodus in den Betriebsmodus frühestens dann, wenn eine vorgegebene Anzahl von Motorzyklen nach der ersten Verbrennung des Verbrennungsmotors 10 nach dem Starten stattgefunden hat. Die vorgegebene Anzahl von Motorzyklen sind vorteilhaft 5 Motorzyklen bis 100 Motorzyklen. Erst wenn die vorgegebene, insbesondere in der Steuereinrichtung 36 gespeicherte Anzahl von Motorzyklen durchlaufen wurde, bewirkt eine Verstellung des Drosselelements 30 vom Bediener aus der ersten Endlage 59 in Richtung auf die zweite Endlage 59, dass das Arbeitsgerät 1, insbesondere die Steuereinrichtung 36, vom Startmodus in den Betriebsmodus verstellt wird. Dabei kann auch vorgesehen sein, dass nach Ablauf der vorgegebenen Anzahl von Motorzyklen nach der ersten Verbrennung eine vorangegangene, während der vorgegebenen Anzahl von Motorzyklen stattgefundene Verstellung des Drosselelements 30 vom Bediener aus der ersten Endlage 59 in Richtung auf die zweite Endlage 59 eine Verstellung vom Startmodus in den Betriebsmodus bewirkt.

Die Steuereinrichtung 36 steuert nach der Verstellung in den Betriebsmodus den Verbrennungsmotor 10 so an, dass die Drehzahl n über die Startdrehzahl ns und über die untere Einkuppeldrehzahl nᵤ ansteigen kann. Unterhalb der unteren Einkuppeldrehzahl nᵤ ist das Abtriebsteil 56 der Fliehkraftkupplung 55 nicht vom Antriebsteil 62 angetrieben. Zwischen der unteren Einkuppeldrehzahl nᵤ und der oberen Einkuppeldrehzahl nₒ kommen das Antriebsteil 62 und das Abtriebsteil 65 in Kontakt, und das Abtriebsteil 56 wird bei steigender Drehzahl vom Antriebsteil 62 mitgenommen. Bei der oberen Einkuppeldrehzahl nₒ haben Antriebsteil 62 und Abtriebsteil 56 die gleiche Drehzahl n und sind miteinander gekoppelt.

Fig. 15 zeigt schematisch einen Betriebsregler 86, der zur Regelung von Zündzeitpunkt und zuzuführender Kraftstoffmenge im Betriebsmodus der Steuereinrichtung 36 dient. Der Betriebsregler 86 besitzt einen Zündzeitpunktregler 83 und einen Kraftstoffregler 84. Der Kraftstoffregler und der Zündzeitpunktregler können für den Startmodus und den Betriebsmodus gleich ausgebildet sein oder unterschiedliche Regler sein. Der Betriebsregler 86 ist im Unterschied zum Startregler 82 insbesondere ein kaskadierter Regler. Beim Betriebsregler 86 dient nicht die Eingangsgröße 85 als Eingangsgröße für den Kraftstoffregler 84, sondern die Ausgangsgröße des Zündzeitpunktreglers 83.

Vorteilhaft ist der Betriebsregler 86 für den Leerlauf vorgesehen. Bei höheren Drehzahlen, insbesondere bei Volllast, werden im Betriebsmodus Kraftstoffmenge und Zündzeitpunkt in vorteilhafter Gestaltung über ein Kennfeld bestimmt.

In alternativer Gestaltung kann vorgesehen sein, dass die Steuereinrichtung 36 keinen Startmodus besitzt, sondern die zuzuführende Kraftstoffmenge und den Zündzeitpunkt auch während des Startens, also beim Anwerfvorgang, mit dem Betriebsregler 86 regelt. Der Betriebsregler 86 ist dabei insbesondere für niedrige Drehzahlen wie den Startvorgang und den Leerlauf vorgesehen. Bei hohen Drehzahlen kann auch eine andere Steuerung von Kraftstoffmenge und Zündzeitpunkt, insbesondere über ein Kennfeld, vorgesehen sein.

In alternativer Gestaltung kann vorgesehen sein, dass Kraftstoffmenge und Zündzeitpunkt auch im Leerlauf und beim Startvorgang über eine oder mehrere Kennlinien oder ein Kennfeld gesteuert werden.

## Patentansprüche

1. Handgeführtes Arbeitsgerät mit einem Werkzeug, mit einem Verbrennungsmotor (10) zum Antrieb des Werkzeugs, mit einem manuell betätigten Seilzugstarter (13) für den Verbrennungsmotor (10) und mit einem vom Bediener zu betätigenden Stopptaster (11) zum Ausschalten des Verbrennungsmotors (10), wobei der Verbrennungsmotor (10) eine in einem Kurbelgehäuse (18) gelagerte Kurbelwelle (21) aufweist, die über eine Fliehkraftkupplung (55) mit dem Werkzeug in Wirkverbindung steht, wobei der Verbrennungsmotor (10) einen Ansaugkanal (25) besitzt, in dem ein Drosselelement (30) angeordnet ist, wobei das Drosselelement (30) von einem Bediener über einen Gashebel (6) zwischen einer ersten Endlage (59) und einer zweiten Endlage (60) verstellbar ist, wobei die erste Endlage (59) dem Leerlauf zugeordnet ist und wobei die zweite Endlage (60) der Volllast zugeordnet ist,
wobei der Verbrennungsmotor (10) eine Zündkerze (33) und ein Kraftstoffventil (34) aufweist, wobei das Arbeitsgerät (1) eine Steuereinrichtung (36) zur Ansteuerung der Zündkerze (33) und des Kraftstoffventils (34) aufweist, wobei die Steuereinrichtung (36) einen Startmodus besitzt, in dem der Verbrennungsmotor (10) über den Seilzugstarter (13) gestartet werden kann, wobei die Steuereinrichtung (36) einen Betriebsmodus besitzt, in dem der Bediener den Verbrennungsmotor (10) durch Verstellen des Drosselelements (30) zur Veränderung der Drehzahl (n) des Verbrennungsmotors (10) ansteuern kann, wobei der Betriebsmodus und der Startmodus sich durch die Steuerung von Zündzeitpunkt (ZZP) und zuzuführender Kraftstoffmenge durch die Steuereinrichtung (36) unterscheiden,
und wobei die Steuereinrichtung (36) sich beim Starten des Verbrennungsmotors (10) aus dem abgeschalteten Zustand automatisch im Startmodus befindet, **dadurch gekennzeichnet, dass** das Drosselelement (30) sich beim Anwerfvorgang in der ersten Endlage (59) befindet, dass der freie Strömungsquerschnitt des Ansaugkanals (25) für den Startmodus und den Leerlaufbetrieb gleich ist und dass Startmodus und Betriebsmodus durch dem Startmodus bzw. dem Betriebsmodus entsprechende Ansteuerung von Kraftstoffventil (34) und Zündkerze (33) elektronisch über die Steuereinrichtung (36) eingestellt werden.

2. Arbeitsgerät nach Anspruch 1,
**dadurch gekennzeichnet, dass** der Betriebsmodus und der Startmodus der Steuereinrichtung (36) sich allein durch die Steuerung von Zündzeitpunkt (ZZP) und zuzuführender Kraftstoffmenge über die Steuereinrichtung (36) unterscheiden.

3. Arbeitsgerät nach Anspruch 1 oder 2,
**dadurch gekennzeichnet, dass** ein einziges steuerbares Drosselelement (30) im Ansaugkanal (25) angeordnet ist.

4. Arbeitsgerät nach einem der Ansprüche 1 bis 3,
**dadurch gekennzeichnet, dass** das Drosselelement (30) mindestens eine Öffnung (61) besitzt, die in der ersten Endlage (59) einen definierten Öffnungsquerschnitt bereitstellt.

5. Arbeitsgerät nach einem der Ansprüche 1 bis 4,
**dadurch gekennzeichnet, dass** die Steuereinrichtung (36) vom Startmodus in den Betriebsmodus verstellt wird, wenn das Drosselelement (30) vom Bediener aus der ersten Endlage (59) in Richtung auf die zweite Endlage (60) verstellt wird.

6. Arbeitsgerät nach Anspruch 5,
**dadurch gekennzeichnet, dass** die Verstellung des Drosselelements (30) aus der ersten Endlage (59) in Richtung auf die zweite Endlage (60) über einen Drucksensor (37) erfasst wird, der einen Druck des Verbrennungsmotors (10) stromab des Drosselelements (30) erfasst.

7. Arbeitsgerät nach einem der Ansprüche 1 bis 6,
**dadurch gekennzeichnet, dass** die Steuereinrichtung (36) frühestens dann vom Startmodus in den Betriebsmodus verstellt wird, wenn mindestens eine Verbrennung stattgefunden hat.

8. Arbeitsgerät nach einem der Ansprüche 1 bis 7,
**dadurch gekennzeichnet, dass** die Steuereinrichtung (36) frühestens dann vom Startmodus in den Betriebsmodus verstellt wird, wenn nach der ersten Verbrennung eine vorgegebene Anzahl von Motorzyklen durchlaufen wurden, wobei die vorgegebene Anzahl von Motorzyklen 5 Motorzyklen bis 100 Motorzyklen beträgt.

9. Arbeitsgerät nach einem der Ansprüche 1 bis 8,
**dadurch gekennzeichnet, dass** die Steuereinrichtung (36) die Drehzahl (n) des Verbrennungsmotors (10) im Startmodus auf eine Startdrehzahl (n_{S}) begrenzt.

10. Arbeitsgerät nach Anspruch 9,
**dadurch gekennzeichnet, dass** die Begrenzung der Drehzahl (n) des Verbrennungsmotors (10) im Startmodus durch Verstellung des Zündzeitpunkts (ZZP) und/oder Unterdrückung des Zündfunkens und/ oder durch Veränderung der zugeführten Kraftstoffmenge erfolgt.

11. Arbeitsgerät nach Anspruch 7 oder 8,
**dadurch gekennzeichnet, dass** die Fliehkraftkupplung (55) einen Einkuppeldrehzahlbereich (nₖ) besitzt, der von einer unteren Einkuppeldrehzahl (nᵤ) und einer oberen Einkuppeldrehzahl (nₒ) begrenzt ist, wobei unterhalb der unteren Einkuppeldrehzahl (nᵤ) das Abtriebsteil (56) der Fliehkraftkupplung (55) nicht vom Antriebsteil (62) angetrieben ist und oberhalb der oberen Einkuppeldrehzahl (nₒ) Antriebsteil (62) und Abtriebsteil (56) die gleiche Drehzahl (n) besitzen, und dass die untere Einkuppeldrehzahl (nᵤ) mindestens 25% oberhalb der Startdrehzahl (n_{S}) liegt.

12. Arbeitsgerät nach einem der Ansprüche 1 bis 11,
**dadurch gekennzeichnet, dass** der Verbrennungsmotor (10) einen Temperatursensor (38) besitzt, der die Temperatur im Kurbelgehäuseinnenraum (23) erfasst.

13. Arbeitsgerät nach einem der Ansprüche 1 bis 12,
**dadurch gekennzeichnet, dass** das Kraftstoffventil (34) eine Mündungsöffnung (35) besitzt, die stromab des Drosselelements (30) in den Ansaugkanal (25) mündet.

14. Arbeitsgerät nach einem der Ansprüche 1 bis 13,
**dadurch gekennzeichnet, dass** die gesamte dem Verbrennungsmotor (10) zuzuführende Kraftstoffmenge über ein einziges Kraftstoffventil (34) zugeführt wird.

15. Arbeitsgerät nach einem der Ansprüche 1 bis 14,
**dadurch gekennzeichnet, dass** der Ansaugkanal (25) über ein Einlassfenster (26) in den Kurbelgehäuseinnenraum (23) mündet, wobei das Einlassfenster (26) von einem Kolben (19) des Verbrennungsmotors (10) gesteuert ist, und wobei das Kraftstoffventil (34) den Kraftstoff bei geöffnetem Einlassfenster (26) durch den Ansaugkanal (25) in den Kurbelgehäuseinnenraum (23) zuführt.

## Claims

1. Hand-guided working implement, having a tool, an internal combustion engine (10) for driving the tool, a manually operated cable-controlled starter (13) for the internal combustion engine (10) and a stop button (11) to be operated by the operator for switching off the internal combustion engine (10), wherein the internal combustion engine (10) has a crankshaft (21) bearing-mounted in a crankcase (18) and operatively connected to the tool via a centrifugal clutch (55), wherein the internal combustion engine (10) has an intake duct (25) in which a throttle element (30) is located, wherein the throttle element (30) can be moved by an operator by means of a throttle lever (6) between a first end position (59) and a second end position (60), wherein the first end position (59) is assigned to idling and wherein the second end position (60) is assigned to full load,
wherein the internal combustion engine (10) has a spark plug (33) and a fuel valve (34), wherein the working implement (1) has a control device (36) for controlling the spark plug (33) and the fuel valve (34), wherein the control device (36) has a starting mode in which the internal combustion engine (10) can be started by means of the cable-controlled starter (13), wherein the control device (36) has an operating mode in which the operator can control the internal combustion engine (10) by moving the throttle element (30) to change the speed (n) of the internal combustion engine (10), wherein the operating mode and the starting mode differ from each other by the control of the ignition timing (ZZP) and the fuel quantity to be supplied,
and wherein the control device (36) is automatically in the starting mode when the internal combustion engine (10) is started from the switched-off state, **characterised in that** the throttle element (30) is in the first end position (59) in the starting process, **in that** the free cross-section of the intake duct (25) is the same for the starting mode and the idling mode, and **in that** the starting mode and the operating mode are set electronically by way of the control device (36) by controlling the fuel valve (34) and the spark plug (33) in accordance with the starting mode and/or the operating mode.

2. Working implement according to claim 1,
**characterised in that** the operating mode and the starting mode only differ in the control of the ignition timing (ZZP) and the fuel quantity to be supplied by way of the control device (36).

3. Working implement according to claim 1 or 2,
**characterised in that** a single controllable throttle element (30) is located in the intake duct (25).

4. Working implement according to any of claims 1 to 3,
**characterised in that** the throttle element (30) has at least one opening (61), which provides a defined opening cross-section in the first end position (59).

5. Working implement according to any of claims 1 to 4,
**characterised in that** the control device (36) is moved from the starting mode into the operating mode if the throttle element (30) is moved by the operator from the first end position (59) towards the second end position (60).

6. Working implement according to claim 5,
**characterised in that** the movement of the throttle element (30) from the first end position (59) towards the second end position (60) is detected by a pressure sensor (37), which detects a pressure of the internal combustion engine (10) downstream of the throttle element (30).

7. Working implement according to any of claims 1 to 6,
**characterised in that** the control device (36) is only moved from the starting mode into the operating mode after at least one combustion has taken place.

8. Working implement according to any of claims 1 to 7,
**characterised in that** the control device (36) is only moved from the starting mode into the operating mode after a preset number of engine cycles has passed following the first combustion, the preset number of engine cycles being 5 engine cycles to 100 engine cycles.

9. Working implement according to any of claims 1 to 8,
**characterised in that** the control device (36) limits the speed (n) of the internal combustion engine (10) to a starting speed (nₛ) in the starting mode.

10. Working implement according to claim 9,
**characterised in that** the speed (n) of the internal combustion engine (10) is limited in the starting mode by adjusting the ignition timing (ZZP) and/or by suppressing the ignition spark and/or by changing the supplied fuel quantity.

11. Working implement according to claim 7 or 8,
**characterised in that** the centrifugal clutch (55) has an engagement speed range (nₖ) delimited by a lower engagement speed (nᵤ) and an upper engagement speed (nₒ), wherein the output part (56) of the centrifugal clutch (55) is not driven by the drive part (62) below the lower engagement speed (nᵤ) and the drive part (62) and the output part (56) have the same speed (n) above the upper engagement speed (nₒ), and **in that** the lower engagement speed (nᵤ) is at least 25% higher than the starting speed (nₛ).

12. Working implement according to any of claims 1 to 11,
**characterised in that** the internal combustion engine (10) has a temperature sensor (38), which detects the temperature in the crankcase interior (23).

13. Working implement according to any of claims 1 to 12,
**characterised in that** the fuel valve (34) has an orifice opening (35) terminating into the intake duct (25) downstream of the throttle element (30).

14. Working implement according to any of claims 1 to 13,
**characterised in that** the total fuel quantity to be supplied to the internal combustion engine (10) is supplied by way of a single fuel valve (34).

15. Working implement according to any of claims 1 to 14,
**characterised in that** the intake duct (25) terminates into the crankcase interior (23) by way of an inlet window (26), wherein the inlet window (26) is controlled by a piston (19) of the internal combustion engine (10), and wherein the fuel valve (34) feeds the fuel into the crankcase interior (23) through the intake duct (25) when the inlet window (26) is open.

## Revendications

1. Appareil de travail à main comprenant un outil, comprenant un moteur à combustion interne (10) pour l'entraînement de l'outil, comprenant un démarreur à câble (13) actionné manuellement pour le moteur à combustion interne (10) et comprenant un bouton d'arrêt (11) à actionner par l'utilisateur pour couper le moteur à combustion interne (10), dans lequel le moteur à combustion interne (10) comporte un vilebrequin (21), monté dans un boîtier de vilebrequin (18), qui est en relation fonctionnelle avec l'outil par un embrayage centrifuge (55), dans lequel le moteur à combustion interne (10) possède un conduit d'aspiration (25) dans lequel est disposé un élément d'étranglement (30), dans lequel l'élément d'étranglement (30) est apte à être déplacé par un utilisateur par une manette des gaz (6) entre une première position finale (59) et une deuxième position finale (60), dans lequel la première position finale (59) est associée au ralenti et dans lequel la deuxième position finale (60) est associée à la pleine charge,
dans lequel le moteur à combustion interne (10) comporte une bougie d'allumage (33) et une vanne à carburant (34), dans lequel l'appareil de travail (1) comporte un dispositif de commande (36) pour commander la bougie d'allumage (33) et la vanne à carburant (34), dans lequel le dispositif de commande (36) possède un mode démarrage dans lequel le moteur à combustion interne (10) peut être démarré par le démarreur à câble (13), dans lequel le dispositif de commande (36) possède un mode fonctionnel dans lequel l'utilisateur peut commander le moteur à combustion interne (10) en déplaçant l'élément d'étranglement (30) pour modifier la vitesse de rotation (n) du moteur à combustion interne (10), dans lequel le mode fonctionnel et le mode démarrage se différencient par la commande de l'instant d'allumage (ZZP) et de la quantité à carburant à amener par le dispositif de commande (36),
et dans lequel le dispositif de commande (36) se trouve automatiquement en mode démarrage lors du démarrage du moteur à combustion interne (10) depuis l'état arrêté,
**caractérisé en ce que** l'élément d'étranglement (30) se trouve dans la première position finale (59) lors de l'opération de lancement, que la section d'écoulement libre du conduit d'aspiration (25) est la même pour le mode démarrage et le fonctionnement au ralenti, et que le mode démarrage et le mode fonctionnel sont réglés électroniquement par le dispositif de commande (36) par une commande de la vanne à carburant (34) et de la bougie d'allumage (33) correspondant respectivement au mode démarrage et au mode fonctionnel.

2. Appareil de travail selon la revendication 1,
**caractérisé en ce que** le mode fonctionnel et le mode démarrage du dispositif de commande (36) se différencient seulement par la commande de l'instant d'allumage (ZZP) et de la quantité à carburant à amener par le dispositif de commande (36).

3. Appareil de travail selon la revendication 1 ou 2,
**caractérisé en ce qu'**un seul élément d'étranglement (30) apte à être commandé est disposé dans le conduit d'aspiration (25).

4. Appareil de travail selon l'une des revendications 1 à 3,
**caractérisé en ce que** l'élément d'étranglement (30) possède au moins une ouverture (61) qui offre une section d'ouverture définie dans la première position finale (59).

5. Appareil de travail selon l'une des revendications 1 à 4,
**caractérisé en ce que** le dispositif de commande (36) est déplacé du mode démarrage au mode fonctionnel quand l'élément d'étranglement (30) est déplacé de la première position finale (59) en direction de la deuxième position finale (60) par l'utilisateur.

6. Appareil de travail selon la revendication 5,
**caractérisé en ce que** le déplacement de l'élément d'étranglement (30) de la première position finale (59) en direction de la deuxième position finale (60) est détecté par un capteur de pression (37) qui détecte une pression du moteur à combustion interne (10) en aval de l'élément d'étranglement (30).

7. Appareil de travail selon l'une des revendications 1 à 6,
**caractérisé en ce que** le dispositif de commande (36) est déplacé du mode de démarrage au mode fonctionnel au plus tôt quand au moins une combustion a eu lieu.

8. Appareil de travail selon l'une des revendications 1 à 7,
**caractérisé en ce que** le dispositif de commande (36) est déplacé du mode démarrage au mode fonctionnel au plus tôt quand un nombre prédéfini de cycles moteur a été effectué après la première combustion, dans lequel le nombre prédéfini de cycles moteur est de 5 cycles moteur à 100 cycles moteur.

9. Appareil de travail selon l'une des revendications 1 à 8,
**caractérisé en ce que** le dispositif de commande (36) limite la vitesse de rotation (n) du moteur à combustion interne (10) en mode démarrage à une vitesse de rotation de démarrage (n_{S}).

10. Appareil de travail selon la revendication 9,
**caractérisé en ce que** la limitation de la vitesse de rotation (n) du moteur à combustion interne (10) en mode démarrage se fait par déplacement de l'instant d'allumage (ZZP) et/ou suppression de l'étincelle d'allumage et/ou par modification de la quantité de carburant amenée.

11. Appareil de travail selon la revendication 7 ou 8,
**caractérisé en ce que** l'embrayage centrifuge (55) possède une plage de vitesse de rotation d'embrayage (nₖ) qui est limitée par une vitesse de rotation d'embrayage inférieure (nᵤ) et une vitesse de rotation d'embrayage supérieure (nₒ), dans lequel au-dessous de la vitesse de rotation d'embrayage inférieure (nᵤ), l'élément de sortie (56) de l'embrayage centrifuge (55) n'est pas entraîné par l'élément d'entraînement (62), et au-dessus de la vitesse de rotation d'embrayage supérieure (nₒ), l'élément d'entraînement (62) et l'élément de sortie (56) ont la même vitesse de rotation (n), et que la vitesse de rotation d'embrayage inférieure (nᵤ) est située à au moins 25 % au-dessus de la vitesse de rotation de démarrage (n_{S}).

12. Appareil de travail selon l'une des revendications 1 à 11,
**caractérisé en ce que** le moteur à combustion interne (10) possède un capteur de température (38) qui détecte la température dans l'espace intérieur du boîtier de vilebrequin (23).

13. Appareil de travail selon l'une des revendications 1 à 12,
**caractérisé en ce que** la vanne à carburant (34) possède une ouverture d'embouchure (35) qui débouche dans le conduit d'aspiration (25) en aval de l'élément d'étranglement (30).

14. Appareil de travail selon l'une des revendications 1 à 13,
**caractérisé en ce que** toute la quantité de carburant à amener dans le moteur à combustion interne (10) est amenée par une seule vanne à carburant (34).

15. Appareil de travail selon l'une des revendications 1 à 14,
**caractérisé en ce que** le conduit d'aspiration (25) débouche par une fenêtre d'admission (26) dans l'espace intérieur de boîtier de vilebrequin (23), dans lequel la fenêtre d'admission (26) est commandée par un piston (19) du moteur à combustion interne (10), et dans lequel la vanne à carburant (34) amène le carburant par le conduit d'aspiration (25) dans l'espace intérieur de boîtier de vilebrequin (23) avec la fenêtre d'admission (26) ouverte.
